# EUROPÄISCHE PATENTSCHRIFT

(11) **EP 2 176 576 B1**
(45) Veröffentlichungstag und Bekanntmachung des Hinweises auf die Patenterteilung: **27.02.2013**
(21) Anmeldenummer: 08774819.0
(22) Anmeldetag: 07.07.2008
(51) Int. Cl.: F16K 31/06, B60T 8/36, B60T 8/50

(54) **MAGNETVENTIL**
SOLENOID VALVE
SOUPAPE MAGNÉTIQUE

(30) Priorität: 07.08.2007 DE 102007037220
(43) Veröffentlichungstag der Anmeldung: 21.04.2010
(73) Patentinhaber: Robert Bosch GmbH, 70442 Stuttgart (DE)
(72) Erfinder: MICHL, Thomas, 70499 Stuttgart (DE)
(86) Internationale Anmeldenummer: PCT/EP2008/058745
(87) Internationale Veröffentlichungsnummer: WO 2009/019094

(56) Entgegenhaltungen:
- WO-A-2007/064823
- DE-A1- 3 700 540
- DE-A1- 4 031 885
- DE-A1- 10 200 915
- GB-A9- 2 332 261

## Beschreibung

### Stand der Technik

Die Erfindung betrifft ein Magnetventil nach der Gattung des unabhängigen Patentanspruchs 1, wie es beispielsweise aus DE 102 00 915 A1 bekannt ist.

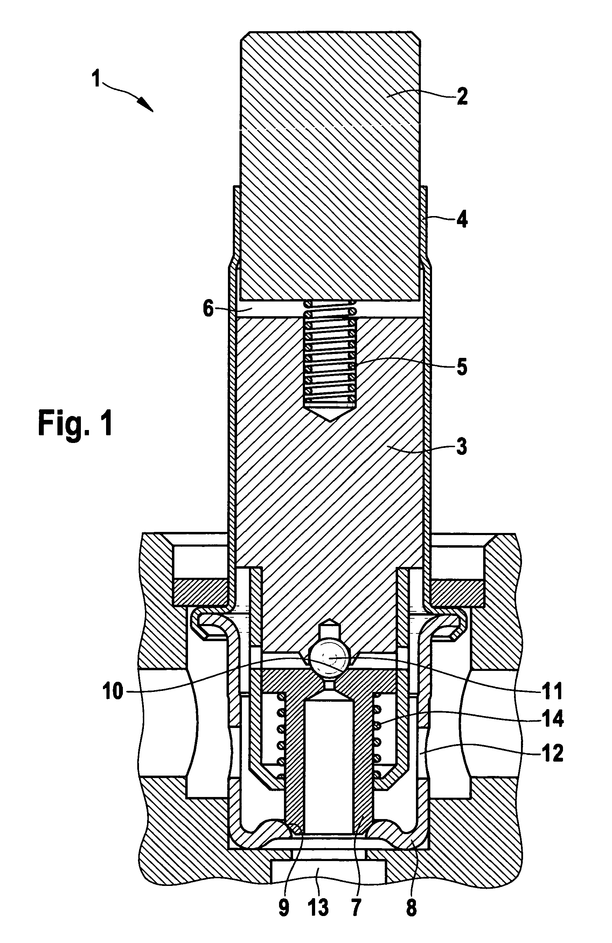

Ein weiteres Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliche Magnetventil, das beispielsweise als zweistufiges stromlos geschlossenes Schaltventil ausgeführt ist, eine Ventilpatrone 1, die einen Polkern 2, einen mit dem Polkern 2 verbundenen Ventileinsatz 4, einen innerhalb des Ventileinsatzes 4 axial beweglich geführten Anker 3, der mit einem Hauptschließelement 7 gekoppelt ist, und einen mit dem Ventileinsatz 4 verbundenen Ventilkörper 8 umfasst, der mit dem Hauptschließelement 7 und einem Hauptventilsitz 9 ein zwischen mindestens einer ersten Strömungsöffnung 12 und einer zweiten Strömungsöffnung 13 angeordnetes Hauptventil bildet, wobei über die axiale Bewegung des Ankers 3 und des Hauptschließelementes 7 der Hauptventilsitz 9 gegen die Kraft einer Rückstellfeder 5 geöffnet und durch die Kraft der Rückstellfeder 5 geschlossen wird, wobei ein Luftspalt 6 zwischen dem Anker 3 und dem Polkern 2 einen maximal möglichen Hub des Ankers 3 vorgibt. Der Ventilkörper 8 und der Ventileinsatz 4 sind jeweils als Hülse ausgeführt und miteinander verbunden.

Durch die zweistufige Ausführung weist ein Nebenventil, das durch ein Nebenschließelement 11, das mit dem Anker 3 verbunden ist, und einen Nebenventilsitz 10 gebildet wird, der im Hauptschließelement 7 angeordnet ist, einen kleinen Dichtdurchmesser und Durchfluss auf, so dass eine Öffnung des Nebenventils gegen einen hohen Druck ermöglicht wird, der sich bei einem teilaktiven bzw. vorgeladenem Druckaufbau ergibt. Das Hauptventil mit dem Hauptventilsitz 9, der einen großen Sitzquerschnitt aufweist, und dem Hauptschließelement 7 ermöglicht einen großen möglichst ungedrosselten Durchfluss, der sich bei einem vollaktiven bzw. selbstsaugenden Druckaufbau ergibt. Eine nicht dargestellte Magnetbaugruppe erzeugt durch Bestromung einer Spulenwicklung eine Magnetkraft, die den längsbeweglichen Anker 3 mit dem Nebendichtelement 11 entgegen der Kraft einer Rückstellfeder 5 gegen den Polkern 2 bewegt, wodurch der Nebenventilsitz 10 geöffnet wird. Durch den mit dem Öffnen des Nebenventilsitzes 11 bewirkten Druckausgleich zwischen der mindestens einen ersten Strömungsöffnung 12 und der zweiten Strömungsöffnung 13 bewegt eine Druckfeder 14 unterstützt von Fluidströmungskräften das Hauptschließelement 7 in Richtung Anker 3 bzw. Nebenschließelement 11, wodurch der Hauptventilsitz 9 schlagartig geöffnet und der Nebenventilsitz 10 wieder geschlossen wird. Als nachteilig können bei diesem herkömmlichen Magnetventil die beim Öffnen des Hauptventils im vorgeladenen Betrieb auftretenden störenden hydraulischen Geräusche angesehen werden, die auch als Fluidschall bezeichnet werden.

In den Dokumenten DE 102 00 915 A1, DE 37 00 540 A1, DE 40 31 885, GB 2 332 261 und WO 2007/064823 A 1 wird jeweils ein Magnetventil beschrieben. Das beschriebene Magnetventil umfasst eine Ventilpatrone, die einen Polkern, einen mit dem Polkern verbundenen Ventileinsatz, einen innerhalb des Ventileinsatzes axial beweglich geführten Anker, der mit einem Hauptschließelement gekoppelt ist, und einen mit dem Ventileinsatz verbundenen Ventilkörper, der mit dem Hauptschließelement ein zwischen mindestens einer ersten Strömungsöffnung und einer zweiten Strömungsöffnung angeordnetes Hauptventil bildet. Hierbei wird über die axiale Bewegung des Ankers und des Hauptschließelementes das Hauptventil gegen die Kraft einer Rückstellfeder geöffnet und durch die Kraft der Rückstellfeder geschlossen. Das Hauptschließelement ist als innerhalb einer Innenbohrung des Ventilkörpers axial beweglich geführtes Schieberelement ausgeführt. Zudem sind das Schieberelement und der Anker miteinander verbunden und durch eine Ausgleichsbohrung druckausgeglichen ausgeführt. Des Weiteren ist das Schieberelement durch eine lineare axiale Öffnungsbewegung des Ankers in eine Öffnungsstellung bewegbar und durch die Rückstellfeder über den Anker durch eine lineare Bewegung in eine Schließstellung bewegbar.

### Offenbarung der Erfindung

Beim Magnetventil mit den Merkmalen des unabhängigen Patentanspruchs 1 ist ein Hauptschließelement als innerhalb einer Innenbohrung eines Ventilkörpers axial beweglich geführtes Schieberelement ausgeführt ist, wobei das Schieberelement und ein Anker miteinander verbunden sind und durch eine Ausgleichsbohrung druckausgeglichen ausgeführt sind, wobei das Schieberelement durch eine lineare axiale Öffnungsbewegung des Ankers in eine Öffnungsstellung bewegbar ist und durch die Rückstellfeder über den Anker durch eine lineare Bewegung in eine Schließstellung bewegbar ist. Die lineare axiale Öffnungsbewegung des Ankers kann durch eine mittels Bestromung einer Magnetbaugruppe erzeugte Magnetkraft bewirkt werden. Durch das erfindungsgemäße Magnetventil kann ein zeitlicher Volumenstrom so eingestellt werden, dass während des Öffnungsvorgangs in vorteilhafter Weise dadurch kein Fluidschall bzw. kein hydraulisch induziertes Schaltgeräusch mit Druckwelle auftritt, dass der Anker mit dem Schieberelement bei geringem oder keinem Vordruck nicht schlagartig in Richtung Polkern bewegt wird, sondern mittels einer linearen Bewegung in die Öffnungsstellung bewegt wird. Da das Schieberelement durch die Kraft der Rückstellfeder ebenfalls durch eine lineare Bewegung in die Schließstellung bewegt wird, treten auch bei der Schließbewegung keine störenden hydraulisch induzierten Geräusche auf. In der Öffnungsstellung des Schieberelements ist ein zwischen mindestens einer ersten Strömungsöffnung und einer zweiten Strömungsöffnung angeordnetes Hauptventil vollständig geöffnet, so dass sich ein hoher Durchfluss ergibt.

Erfindungsgemäß ist das Schieberelement als Kunststoffteil mit zwei Dichtlippen ausgeführt, welche das Hauptventil gegen die Innenbohrung des Ventilkörpers abdichten. Die Dichtlippen können beispielsweise an das Kunststoffschieberelement angespritzt werden und/oder bei der Montage mit dem Schieberelement kalibriert werden. Das Schieberelement kann beispielsweise zweiteilig ausgeführt werden, wobei ein oberes Schieberelement die erste Dichtlippe aufweist und ein unteres Schieberelement die zweite Dichtlippe aufweist. Die Dichtlippen sind erfindungsgemäß so angeordnet, dass sich über einen an der mindestens einen ersten Strömungsöffnung anliegenden Vordruck eine selbsttätige Abdichtung zwischen den Dichtlippen und der Innenbohrung des Ventilkörpers ergibt. Zudem kann das obere Schieberelement formschlüssig und/oder kraftschlüssig mit dem unteren Schieberelement verbunden werden. Die an der Innenbohrung des Ventilkörpers anliegenden Dichtlippen unterstützen in vorteilhafter Weise die lineare Bewegung des Schieberelements. Zudem ergibt sich eine geringe Leckage, da die Dichtwirkung der Dichtlippen mit zunehmendem Vordruck ebenfalls zunimmt.

Durch die in den abhängigen Ansprüchen aufgeführten Maßnahmen und Weiterbildungen sind vorteilhafte Verbesserungen des im unabhängigen Patentanspruch 1 angegebenen Magnetventils möglich.

In Ausgestaltung des erfindungsgemäßen Magnetventils sind der Ventileinsatz und der Ventilkörper jeweils als Hülse ausgeführt, wobei die Ventileinsatzhülse und die Ventilkörperhülse einteilig oder zweiteilig ausgeführt werden können.

In weiterer Ausgestaltung des erfindungsgemäßen Magnetventils ist die mindestens eine erste Strömungsöffnung so ausgeführt, dass ein zeitlicher Volumenstrom zwischen der mindestens einen ersten Strömungsöffnung und der zweiten Strömungsöffnung geräuschreduziert ist. Die mindestens eine erste Strömungsöffnung ist beispielsweise so ausgeführt, dass sich während der Öffnungsphase des Hauptventils ein progressiver zeitlicher Volumenstrom und während des Übergangs zur Vollöffnung des Hauptventils ein degressiver zeitlicher Volumenstrom zwischen der mindestens einen ersten Strömungsöffnung und der zweiten Strömungsöffnung ergibt. Dies wird beispielsweise durch eine runde, viereckige oder dreieckige Form der mindestens einen ersten Strömungsöffnung erreicht. Zudem wird die mindestens eine erste Strömungsöffnung so ausgeführt, dass ein Gradient des zeitlichen Volumenstroms zwischen der mindestens einen erste Strömungsöffnung und der zweiten Strömungsöffnung einen vorgegebenen Schwellwert von beispielsweise 300bar/s nicht überschreitet.

In weiterer Ausgestaltung des erfindungsgemäßen Magnetventils kann der druckausgeglichene Anker als Flachanker oder als Tauchanker ausgeführt werden. Der Flachanker wirkt mit einem Polkern zusammen, der eine flache Polfläche aufweist, und der Tauchanker bildet mit einem korrespondierend ausgeführten Polkern eine Tauchstufe. Der oben erwähnte Gradient des zeitlichen Volumenstroms kann auch durch den Ansteuerstrom der Magnetbaugruppe und die Ausführung des Ankers und des Polkerns beeinflusst werden.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

- Fig. 1: zeigt eine schematische Schnittdarstellung einer Ventilpatrone für ein herkömmliches Magnetventil.
- Fig. 2: zeigt eine schematische Schnittdarstellung eines ersten Ausführungsbeispiels einer Ventilpatrone für ein erfindungsgemäßes Magnetventil.
- Fig. 3: zeigt eine schematische Schnittdarstellung eines zweiten Ausführungsbeispiels einer Ventilpatrone für ein erfindungsgemäßes Magnetventil.
- Fig. 4a bis 6b: zeigen eine Querschnittsformen einer ersten Strömungsöffnung der erfindungsgemäßen Ventilpatrone gemäß Fig. 2 oder 3 und zugehörige Diagramme eines zeitlichen Volumenstroms.

### Ausführungsformen der Erfindung

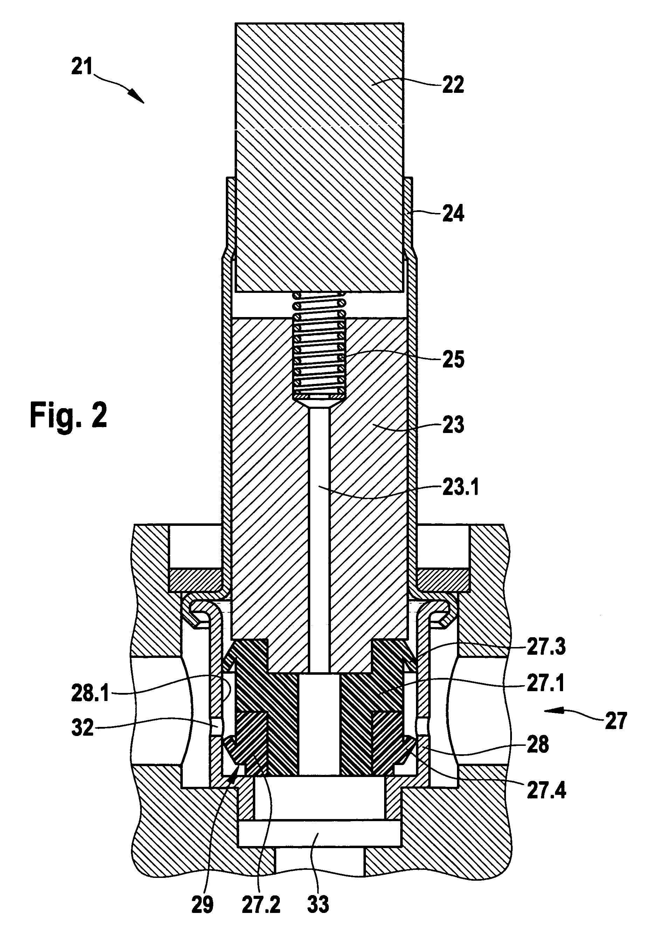

Wie aus Fig. 2 ersichtlich ist, umfasst ein erstes Ausführungsbeispiel einer Ventiipatrone 21 für ein erfindungsgemäßes Magnetventil einen Polkern 22, einen mit dem Polkern 22 verbundenen Ventileinsatz 24, einen innerhalb des Ventileinsatzes 24 axial beweglich geführten Anker 23, der mit einem Hauptschließelement 27 verbunden ist, und einen mit dem Ventileinsatz 24 verbundenen Ventilkörper 28, der mit dem Hauptschließelement 27 ein zwischen mehreren ersten Strömungsöffnungen 32 und einer zweiten Strömungsöffnung 33 angeordnetes Hauptventil 29 bildet. Das Hauptschließelement ist als zweiteiliges innerhalb einer Innenbohrung 28.1 des Ventilkörpers 28 axial beweglich geführtes Schieberelement 27 aus Kunststoff ausgeführt, das ein oberes Schieberelement 27.1, das eine erste Dichtlippe 27.3 aufweist, und ein unteres Schieberelement 27.2 umfasst, das eine zweite Dichtlippe 27.4 aufweist. Die Dichtlippen 27.3, 27.4 sind so angeordnet, dass über einen an den ersten Strömungsöffnungen 32 anliegenden Vordruck eine selbsttätige Abdichtung zwischen den Dichtlippen 27.3, 27.4 und der Innenbohrung 28.1 des Ventilkörpers 28 erfolgt. Das obere Schieberelement 27.1 ist beispielsweise mit dem unteren Schieberelement 27.2 verpresst oder verklinkt oder auf sonstige Art formschlüssig und/oder kraftschlüssig mit dem unteren Schieberelement 27.2 verbunden. Im dargestellten Ausführungsbeispiel sind die Dichtlippen 27.3, 27.4 an das Kunststoffschieberelement 27 angespritzt. Bei einer alternativen nicht dargestellten Ausführungsform werden die Dichtlippen mit dem Schieberelement verbunden und bei der Montage mit dem Schieberelement kalibriert. Zudem sind der Ventileinsatz 24 und der Ventilkörper 28 jeweils als Hülse ausgeführt und miteinander verbunden. Bei einer alternativen nicht dargestellten Ausführungsform können die Ventileinsatzhülse und die Ventilkörperhülse einteilig ausgeführt werden.

Wie weiter aus Fig. 2 ersichtlich ist, sind das Schieberelement 27 und der Anker 23 durch eine Ausgleichsbohrung 23.1 druckausgeglichen ausgeführt. Zur Öffnung des Hauptventils 29 wird eine nicht dargestellte Magnetbaugruppe bestromt, wodurch eine erzeugte Magnetkraft den Anker 23 mit dem Schieberelement 27 gegen die Kraft einer Rückstellfeder 25 durch eine lineare Öffnungsbewegung axial in Richtung Polkern 22 in eine Öffnungsstellung bewegt. Durch die Rückstellfeder 25 wird das Schieberelement 27 über den Anker 23 durch eine lineare Bewegung in die Schließstellung bewegt, wenn die Bestromung der nicht dargestellten Magnetbaugruppe beendet wird. Durch die lineare Bewegung des Schieberelements 27 werden die bei den herkömmlichen Magnetventilen auftretenden störenden hydraulischen Geräusche vermieden. Zudem unterstützen die an der Innenbohrung 28.1 des Ventilkörpers 28 anliegenden Dichtlippen in vorteilhafter Weise die linearen Bewegungen des Schieberelements 27. Da die Dichtwirkung der Dichtlippen 27.3, 27.4 mit zunehmendem Vordruck ebenfalls zunimmt, ergibt sich zudem eine geringe Leckage.

Zusätzlich kann der zeitliche Volumenstrom durch eine entsprechende Gestaltung der ersten Strömungsöffnungen 32 geräuschreduziert werden. Die ersten Strömungsöffnungen 32 können beispielsweise so ausgeführt werden, dass sich während der Öffnungsphase des Hauptventils 29 ein progressiver zeitlicher Volumenstrom und während des Übergangs zur Vollöffnung des Hauptventils 29 ein degressiver zeitlicher Volumenstrom zwischen den ersten Strömungsöffnungen 32 und der zweiten Strömungsöffnung 33 ergibt. Die ersten Strömungsöffnungen 32 können in Abhängigkeit von der Anwendung des Magnetventils beispielsweise so ausgeführt werden, dass ein Gradient des zeitlichen Volumenstroms zwischen den ersten Strömungsöffnungen 32 und der zweiten Strömungsöffnung 33 einen vorgegebenen Schwellwert von beispielsweise 300bar/s nicht überschreitet.

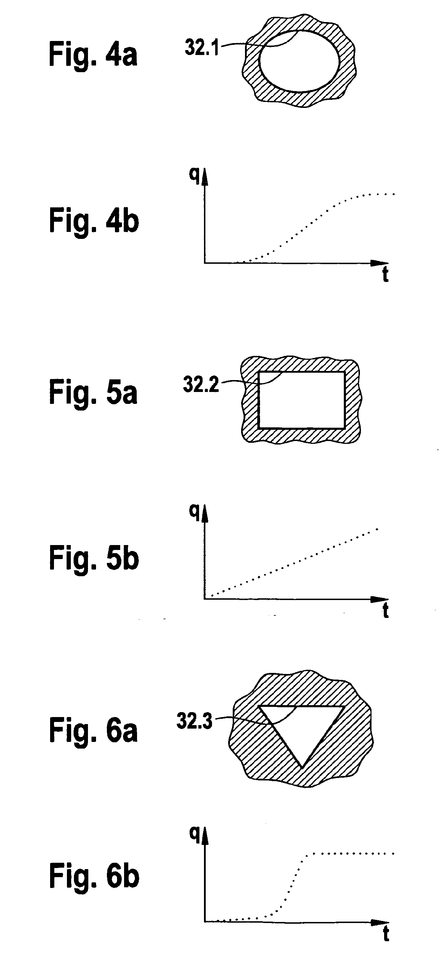

Wie aus Fig. 4a, 5a und 6a ersichtlich ist, können die ersten Strömungsöffnungen 32 zur Erzielung eines gewünschten zeitlichen Volumenstroms verschiedene Formen aufweisen. Die zugehörigen Diagramme (Fig. 4b, 5b und 6b) zeigen jeweils die mit den Formen der Strömungsöffnungen 32 korrespondierenden zeitlichen Volumenströme. Fig. 4b zeigt den zeitlichen Volumenstrom für eine runde Form 32.1 der ersten Strömungsöffnungen 32 gemäß Fig. 4a. Fig. 5b zeigt den zeitlichen Volumenstrom für eine viereckige Form 32.2 der ersten Strömungsöffnungen 32 gemäß Fig. 5a. Fig. 6b zeigt den zeitlichen Volumenstrom für eine dreieckige Form 32.3 der ersten Strömungsöffnungen 32 gemäß Fig. 6a.

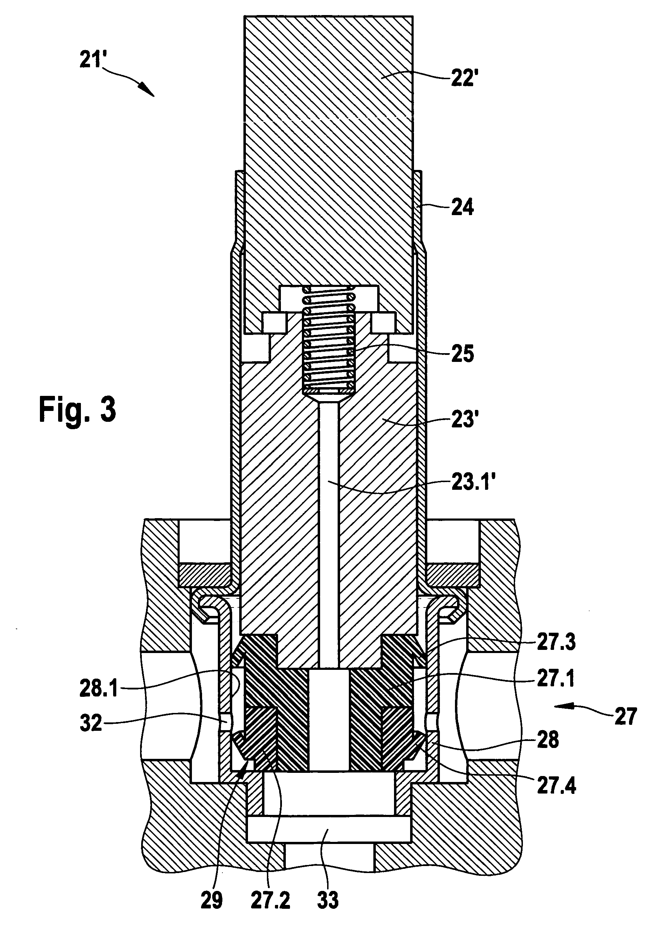

Wie aus Fig. 3 ersichtlich ist, umfasst ein zweites Ausführungsbeispiel einer Ventilpatrone 21' für ein erfindungsgemäßes Magnetventil analog zum ersten Ausführungsbeispiel einen Polkern 22', einen mit dem Polkern 22' verbundenen Ventileinsatz 24, einen innerhalb des Ventileinsatzes 24 axial beweglich geführten Anker 23', der mit einem Hauptschließelement 27 verbunden ist, und einen mit dem Ventileinsatz 24 verbundenen Ventilkörper 28, der mit dem Hauptschließelement 27 ein zwischen mehreren ersten Strömungsöffnungen 32 und einer zweiten Strömungsöffnung 33 angeordnetes Hauptventil 29 bildet. Im Unterschied zum ersten Ausführungsbeispiel gemäß Fig. 1 ist der über eine Ausgleichsbohrung 23.1' druckausgeglichene Anker im zweiten Ausführungsbeispiel als Tauchanker 23' ausgeführt, der mit einem korrespondierend ausgeführten Polkern 22' eine Tauchstufe bildet. Durch die Ausführung als Tauchstufe kann das magnetische Verhalten des Tauchankers 23' und des Polkerns 22' besser durch einen angelegten Steuerstrom beeinflusst werden. Über den angelegten Steuerstrom und die resultierende lineare axiale Bewegung des Tauchankers 23' kann auch der Gradient des zeitlichen Volumenstroms zwischen den ersten Strömungsöffnungen 32 und der zweiten Strömungsöffnung 33 beeinflusst werden. Da die Komponenten bzw. Elemente, die in Fig. 2 und 3 gleiche Bezugszeichen aufweisen, die gleichen bzw. analoge Funktionen ausführen, wird hier auf eine wiederholende Beschreibung dieser Komponenten und Elemente verzichtet.

Die beschriebenen Ausführungsformen der Erfindung reduzieren bzw. vermeiden durch die lineare Bewegung des Schieberelements und durch die Gestaltung der ersten Strömungsöffnungen in vorteilhafter Weise hydraulisch induzierte Schaltgeräusche, die bei einem herkömmlichen Magnetventil durch das schlagartige Öffnen des Ventils bei geringem oder keinem Vordruck induziert werden.

## Patentansprüche

1. Magnetventil mit einer Ventilpatrone (21, 21'), die einen Polkern (22, 22'), einen mit dem Polkern (22, 22') verbundenen Ventileinsatz (24), einen innerhalb des Ventileinsatzes (24) axial beweglich geführten Anker (23, 23'), der mit einem Hauptschließelement (27) gekoppelt ist, und einen mit dem Ventileinsatz (24) verbundenen Ventilkörper (28) umfasst, der mit dem Hauptschließelement (27) ein zwischen mindestens einer ersten Strömungsöffnung (32) und einer zweiten Strömungsöffnung (33) angeordnetes Hauptventil (29) bildet, wobei über die axiale Bewegung des Ankers (23, 23') und des Hauptschließelementes (27) das Hauptventil (29) gegen die Kraft einer Rückstellfeder (25) geöffnet und durch die Kraft der Rückstellfeder (25) geschlossen wird, wobei das Hauptschließelement als innerhalb einer Innenbohrung (28.1) des Ventilkörpers (28) axial beweglich geführtes Schieberelement (27) ausgeführt ist, wobei das Schieberelement (27) und der Anker (23, 23') miteinander verbunden sind und durch eine Ausgleichsbohrung (23.1, 23.1') druckausgeglichen ausgeführt sind, und wobei das Schieberelement (27) durch eine lineare axiale Öffnungsbewegung des Ankers (23, 23') in eine Öffnungsstellung bewegbar ist und durch die Rückstellfeder (25) über den Anker (23, 23') durch eine lineare Bewegung in eine Schließstellung bewegbar ist, **dadurch gekennzeichnet, dass** das Schieberelement (27) als Kunststoffteil mit zwei Dichtlippen (27.3, 27.4) ausgeführt ist, welche das Hauptventil (29) gegen die Innenbohrung (28.1) des Ventilkörpers (28) abdichten, wobei die Dichtlippen (27.3, 27.4) so angeordnet sind, dass über einen an der mindestens einen ersten Strömungsöffnung (32) anliegenden Vordruck eine selbsttätige Abdichtung zwischen den Dichtlippen (27.3, 27.4) und der Innenbohrung (28.1) des Ventilkörpers (28) erfolgt.

2. Magnetventil nach Anspruch 1, **dadurch gekennzeichnet, dass** die Dichtlippen (27.3, 27.4) an das Kunststoffschieberelement (27) angespritzt und/oder bei der Montage mit dem Schieberelement (27) kalibrierbar sind.

3. Magnetventil nach Anspruch 1 oder 2, **dadurch gekennzeichnet, dass** das Schieberelement (27) zweitteilig ausgeführt ist, wobei ein oberes Schieberelement (27.1) die erste Dichtlippe (27.3) aufweist und ein unteres Schieberelement (27.2) die zweite Dichtlippe (27.4) aufweist,

4. Magnetventil nach Anspruch 3, **dadurch gekennzeichnet, dass** das obere Schieberelement (27.1) formschlüssig und/oder kraftschlüssig mit dem unteren Schieberelement (27.2) verbunden ist.

5. Magnetventil nach einem der Ansprüche 1 bis 4, **dadurch gekennzeichnet, dass** der Ventileinsatz (24) und der Ventilkörper (28) jeweils als Hülse ausgeführt sind, wobei die Ventileinsatzhülse (24) und die Ventilkörperhülse (28) einteilig und/oder zweiteilig ausführbar sind.

6. Magnetventil nach einem der Ansprüche 1 bis 5, **dadurch gekennzeichnet, dass** die mindestens eine erste Strömungsöffnung (32) mit einer runden, viereckigen oder dreieckigen Form ausgeführt ist, so dass ein zeitlicher Volumenstrom zwischen der mindestens einen ersten Strömungsöffnung (32) und der zweiten Strömungsöffnung (33) geräuschreduziert ist.

7. Magnetventil nach Anspruch 6, **dadurch gekennzeichnet, dass** die mindestens eine erste Strömungsöffnung (32) so ausgeführt ist, dass sich während der Öffnungsphase des Hauptventils (29) ein progressiver zeitlicher Volumenstrom und während des Übergangs zur Vollöffnung des Hauptventils (29) ein degressiver zeitlicher Volumenstrom zwischen der mindestens einen ersten Strömungsöffnung (32) und der zweiten Strömungsöffnung (33) ergibt.

8. Magnetventil nach Anspruch 6 oder 7, **dadurch gekennzeichnet, dass** die mindestens eine erste Strömungsöffnung (32) so ausgeführt ist, dass ein Gradient des zeitlichen Volumenstroms zwischen der mindestens einen ersten Strömungsöffnung (32) und der zweiten Strömungsöffnung (33) einen vorgegebenen Schwellwert nicht überschreitet.

9. Magnetventil nach einem der Ansprüche 1 bis 8, **dadurch gekennzeichnet, dass** der druckausgeglichene Anker als Flachanker (23) oder als Tauchanker (23') ausgeführt ist, wobei der Flachanker (23) mit einem Polkern (22) zusammenwirkt, der eine flache Polfläche aufweist, und wobei der Tauchanker (23') mit einem korrespondierend ausgeführten Polkern (22') eine Tauchstufe bildet.

## Claims

1. Solenoid valve with a valve cartridge (21, 21') which comprises a pole core (22, 22'), a valve insert (24) connected to the pole core (22, 22') an armature (23, 23') which is guided axially movably inside the valve insert (24) and is coupled to a main closing element (27), and a valve body (28) which is connected to the valve insert (24) and forms with the main closing element (27) a main valve (29) arranged between at least one first flow orifice (32) and one second flow orifice (33), the main valve (29) being opened counter to the force of a return spring (25) via the axial movement of the armature (23, 23') and of the main closing element (27) and being closed by the force of the return spring (25), the main closing element being designed as a slide element (27) guided axially movably inside an inner bore (28.1) of the valve body (28), the slide element (27) and the armature (23, 23') being connected to one another and being designed to be pressure-compensated by means of a compensating bore (23.1, 23.1'), and the slide element (27) being movable into an opening position by means of a linear axial opening movement of the armature (23, 23') and being movable into a closing position by the return spring (25) via the armature (23, 23') by means of a linear movement, **characterized in that** the slide element (27) is designed as a plastic part with two sealing lips (27.3, 27.4) which seal off the main valve (29) with respect to the inner bore (28.1) of the valve body (28), the sealing lips (27.3, 27.4) being arranged such that automatic sealing-off between the sealing lips (27.3, 27.4) and the inner bore (28.1) of the valve body (28) takes place via an admission pressure prevailing at the at least one first flow orifice (32).

2. Solenoid valve according to Claim 1, **characterized in that** the sealing lips (27.3, 27.4) are injection-moulded onto the plastic slide element (27) and/or can be calibrated with the slide element (27) during assembly.

3. Solenoid valve according to Claim 1 or 2, **characterized in that** the slide element (27) is designed in two parts, an upper slide element (27.1) having the first sealing lip (27.3) and a lower slide element (27.2) having the second sealing lip (27.4).

4. Solenoid valve according to Claim 3, **characterized in that** the upper slide element (27.1) is connected positively and/or non-positively to the lower slide element (27.2).

5. Solenoid valve according to one of Claims 1 to 4, **characterized in that** the valve insert (24) and the valve body (28) are designed in each case as a sleeve, the valve-insert sleeve (24) and the valve-body sleeve (28) being capable of being produced in one part and/or in two parts.

6. Solenoid valve according to one of Claims 1 to 5, **characterized in that** the at least one first flow orifice (32) is designed with a round, square or triangular shape, so that the noise of a time-related volume flow between the at least one first flow orifice (32) and the second flow orifice (33) is reduced.

7. Solenoid valve according to Claim 6, **characterized in that** the at least one first flow orifice (32) is designed such that, during the opening phase of the main valve (29), a progressive time-related volume flow between the at least one first flow orifice (32) and the second flow orifice (33) is obtained, and, during the transition to the full opening of the main valve (29), a degressive time-related volume flow between the at least one first flow orifice (32) and the second flow orifice (33) is obtained.

8. Solenoid valve according to Claim 6 or 7, **characterized in that** the at least one first flow orifice (32) is designed such that a gradient of the time-related volume flow between the at least one first flow orifice (32) and the second flow orifice (33) does not overshoot a predetermined threshold value.

9. Solenoid valve according to one of Claims 1 to 8, **characterized in that** the pressure-compensated armature is designed as a flat armature (23) or as a plunge armature (23'), the flat armature (23) cooperating with a pole core (22) which has a flat pole face, and the plunge armature (23') forming with a correspondingly designed pole core (22') a plunge stage.

## Revendications

1. Électrovanne comprenant une cartouche de vanne (21, 21') qui comporte un noyau polaire (22, 22'), un insert de vanne (24) relié au noyau polaire (22, 22'), un induit (23, 23') guidé de manière axialement mobile à l'intérieur de l'insert de vanne (24), lequel induit est accouplé à un élément de fermeture principal (27), et un corps de vanne (28) relié à l'insert de vanne (24), lequel corps de vanne forme conjointement avec l'élément de fermeture principal (27) une vanne principale (29) disposée entre au moins une première ouverture d'écoulement (32) et une deuxième ouverture d'écoulement (33), la vanne principale (29) étant ouverte à l'encontre de la force d'un ressort de rappel (25) par le mouvement axial de l'induit (23, 23') et de l'élément de fermeture principal (27) et la vanne principale (29) étant fermée par la force du ressort de rappel (25), l'élément de fermeture principal étant réalisé sous forme d'élément de tiroir (27) guidé de manière axialement mobile à l'intérieur d'un alésage intérieur (28.1) du corps de vanne (28), l'élément de tiroir (27) et l'induit (23, 23') étant reliés l'un à l'autre et étant réalisés de manière équilibrée en pression grâce à un alésage d'équilibrage (23.1, 23.1'), et l'élément de tiroir (27) pouvant être déplacé jusqu'à une position d'ouverture par un mouvement d'ouverture axial linéaire de l'induit (23, 23') et pouvant être déplacé jusqu'à une position de fermeture par un mouvement linéaire, par le ressort de rappel (25) par l'intermédiaire de l'induit (23, 23'), **caractérisée en ce que** l'élément de tiroir (27) est réalisé sous forme de pièce en plastique dotée de deux lèvres d'étanchéité (27.3, 27.4) qui réalisent l'étanchéité de la vanne principale (29) contre l'alésage intérieur (28.1) du corps de vanne (28), les lèvres d'étanchéité (27.3, 27.4) étant disposées de telle sorte que, par le biais d'une pression d'alimentation s'appliquant contre l'au moins une première ouverture d'écoulement (32), une étanchéification automatique ait lieu entre les lèvres d'étanchéité (27.3, 27.4) et l'alésage intérieur (28.1) du corps de vanne (28).

2. Électrovanne selon la revendication 1, **caractérisée en ce que** les lèvres d'étanchéité (27.3, 27.4) sont moulées par injection sur l'élément de tiroir en plastique (27) et/ou peuvent être calibrées à l'aide de l'élément de tiroir (27) lors du montage.

3. Électrovanne selon la revendication 1 ou 2, **caractérisée en ce que** l'élément de tiroir (27) est réalisé en deux pièces, un élément de tiroir supérieur (27.1) comprenant la première lèvre d'étanchéité (27.3) et un élément de tiroir inférieur (27.2) comprenant la deuxième lèvre d'étanchéité (27.4).

4. Électrovanne selon la revendication 3, **caractérisée en ce que** l'élément de tiroir supérieur (27.1) est relié à l'élément de tiroir inférieur (27.2) par coopération de formes et/ou à force.

5. Électrovanne selon l'une quelconque des revendications 1 à 4, **caractérisée en ce que** l'insert de vanne (24) et le corps de vanne (28) sont respectivement réalisés sous forme de douille, la douille d'insert de vanne (24) et la douille de corps de vanne (28) pouvant être réalisées d'une seule pièce et/ou en deux pièces.

6. Électrovanne selon l'une quelconque des revendications 1 à 5, **caractérisée en ce que** l'au moins une première ouverture d'écoulement (32) est réalisée avec une forme ronde, quadrangulaire ou triangulaire, de sorte que le bruit d'un débit volumique dans le temps entre l'au moins une première ouverture d'écoulement (32) et la deuxième ouverture d'écoulement (33) soit réduit.

7. Électrovanne selon la revendication 6, **caractérisée en ce que** l'au moins une première ouverture d'écoulement (32) est réalisée de telle sorte qu'il se produise, entre l'au moins une première ouverture d'écoulement (32) et la deuxième ouverture d'écoulement (33), un débit volumique progressif dans le temps pendant la phase d'ouverture de la vanne principale (29) et un débit volumique dégressif dans le temps pendant la transition vers l'ouverture complète de la vanne principale (29).

8. Électrovanne selon la revendication 6 ou 7, **caractérisée en ce que** l'au moins une première ouverture d'écoulement (32) est réalisée de telle sorte qu'un gradient du débit volumique dans le temps entre l'au moins une première ouverture d'écoulement (32) et la deuxième ouverture d'écoulement (33) n'excède pas une valeur seuil prédéfinie.

9. Électrovanne selon l'une quelconque des revendications 1 à 8, **caractérisée en ce que** l'induit équilibré en pression est réalisé sous forme d'induit plat (23) ou sous forme d'induit plongeur (23'), l'induit plat (23) coopérant avec un noyau polaire (22) qui présente une surface polaire plane, et l'induit plongeur (23') formant, conjointement avec un noyau plongeur (22') réalisé de manière correspondante, un gradin d'enfoncement.
